# EUROPEAN PATENT SPECIFICATION

(11) **EP 3 455 176 B1**
(45) Date of publication and mention of the grant of the patent: **03.06.2020**
(21) Application number: 17732754.1
(22) Date of filing: 13.04.2017
(51) Int. Cl.: C02F 11/08, C02F 1/28, C02F 1/42, C02F 1/44

(54) **METHOD FOR THE OXIDATION OF ORGANIC SLUDGES IN CYCLIC BATCH MODE**
VERFAHREN ZUR OXIDATION VON ORGANISCHEN SCHLÄMMEN IN ZYKLISCHEM BATCH-MODUS
PROCÉDÉ POUR L'OXYDATION DE BOUES ORGANIQUES EN MODE PAR LOTS CYCLIQUE

(30) Priority: 11.05.2016 EP 16001059
(43) Date of publication of application: 20.03.2019
(73) Proprietor: Fachhochschule Nordwestschweiz FHNW, 5210 Windisch (CH)
(72) Inventor: VOGEL, Frédéric, 5018 Erlinsbach (CH); HÜBNER, Tobias, 04177 Leipzig (DE); ROTH, Markus, 8048 Zürich (CH); RUPPEN, Peter, 3930 Visp (CH); MANGOLD, Fabienne, 5442 Fislisbach (CH); DE BONI, Erich, 5400 Baden (CH)
(74) Representative: Fischer, Michael
(86) International application number: PCT/EP2017/059014
(87) International publication number: WO 2017/194267

(56) References cited:
- JP-A- 2001 121 167
- US-A- 5 252 224
- US-A1- 2015 151 999
- SHANABLEH A ED - LÜRLING MIQUEL MACKAY ELEANOR REITZEL KASPER SPEARS BRYAN M: "Production of useful organic matter from sludge using hydrothermal treatment", WATER RESEARCH, ELSEVIER, AMSTERDAM, NL, vol. 34, no. 3, 15 February 2000 (2000-02-15), pages 945-951, XP004362405, ISSN: 0043-1354, DOI: 10.1016/S0043-1354(99)00222-5
- OSAMU SAWAI ET AL: "Supercritical water gasification of sewage sludge using bench-scale batch reactor: advantages and drawbacks", JOURNAL OF MATERIAL CYCLES AND WASTE MANAGEMENT, vol. 16, no. 1, 1 February 2014 (2014-02-01), pages 82-92, XP055313480, Tokyo ISSN: 1438-4957, DOI: 10.1007/s10163-013-0144-7

## Description

The present invention relates to a method for the oxidation of organic sludges, i.e. organic and optionally inorganic matter in aqueous mixtures.

More specifically, the present invention resides in the field of oxidizing/mineralizing aqueous organic matter operated in a cyclic batch mode and at least partially at supercritical temperatures and pressures.

According to an estimate of the world health organization (WHO) for 2015 approximately 2.4 billion people worldwide have no access to 'improved sanitation facilities'. An improved sanitation facility is a facility that allows hygienic separation of human excreta from human contact. Around 1.04 billion people worldwide practice open defecation, 761 million people use public or shared toilets and 693 million people use toilets that do not meet the minimum hygiene standards of the WHO. The lack of safe sanitation infrastructure is especially encountered in rural areas of low-income countries and in informal urban settlements, so-called 'slums'. Regions that are mostly concerned are South-east Asia and sub-Saharan Africa. More general, the concept might be desirable wherever urine and feces need to be treated properly. Examples are mountain shelters, ships, trains, prison camps, refugee camps, research camps, quarantine offices. Problems that arise from lacking or unsafe sanitation infrastructure are, for example, contamination of drinking water, the promotion of diseases and high infant mortalities (WHO, 2013. Progress on sanitation and drinking water: 2013 update).

In 2012 the BILL & MELINDA GATES FOUNDATION launched a worldwide competition for international research projects to develop alternative sanitation concepts that are applicable for regions that lack improved sanitation ('REINVENT THE TOILET CHALLENGE'). Within the scope of this competition the Swiss research institute EAWAG in Dubendorf, in co-operation with several other research institutes, developed a toilet that separates the waste streams, i.e. urine and feces, and recovers cleaning water for reuse. The toilet was called BLUE DIVERSION TOILET.

The treatment of urine and feces remained an unsolved issue of this toilet. To tackle this problem the AUTARKY project was launched that was also funded by the BILL & MELINDA GATES FOUNDATION. An on-site treatment concept was developed to treat the waste streams that guarantees safe sanitation and enables the recovery of resources from urine and feces.

Method and systems according to the art are disclosed for example in the US Patents Nos. 3,885,254, 5,252,224 and 5,106,513 as well as in the US Patent Application No. 2004/034906 A1 and Japanese Patent Application No. 2001-121167.

These methods and systems according to the prior art have a number of disadvantages which often are the killing criteria for use in the field.

Continuous systems require a pump. This limits the dry matter content of the feed because, above a certain dry matter content, the feed can no longer be pumped. The check valves of the pump may also become plugged.

Usually, these systems are designed to treat large amounts of feed, otherwise they become inefficient and/or not economical.

Most continuous systems need a skilled operator which is not available in particular in under-developed countries and/or areas. The goal here has to be a solution that is operated by the user of the toilet with a minimum of interactions.

Non-thermal (e.g. biological) solutions do not destroy all pathogens.

Continuous systems rely on homogeneous feeds with a constant heating value to provide constant process performance, i.e. a constant product (process water and gas) quality.

(Atmospheric) combustion systems are inefficient because they usually require external energy because of the high water content of fecal sludge. Further, (atmospheric) combustion systems produce an odorous exhaust gas or soot and they require additional gas cleaning/odor treatment.

Prior art systems do not provide sterile water.

Large systems with a high throughput need several hours for starting up and cannot be operated intermittently.

The present invention therefore has the objective to treat mixtures of organic matter and water ("sludges") that may also contain harmful components such as pathogens, in a way that the organic sludge can be converted to the largest extent possible to the harmless products CO₂, H₂O, NH₃ using a readily available and cheap oxidant, in a safe enclosure, and within less than ca. one hour. To be applicable under a vast spectrum of conditions, the process should be suited to treating relatively small amounts of feed mixtures at a time, of varying composition and consistence, but in particular for treating fecal sludges. The process should operate without any external thermal energy supply, except for the initial starting of the process.

This goal is achieved according to the present invention by a method for an oxidation of an organic sludge, comprising the following steps:
a) collecting the organic sludge and pretreating the organic sludge to generate a pourable pulp;
b) conveying a portion of the pourable pulp into an injection chamber, preferably by gravitation;
c) injecting the portion of the pourable pulp and an oxidant into a reaction vessel;
d) initially pressurizing and heating-up the reaction vessel in order to initiate an oxidation reaction in the reaction vessel; said oxidation reaction producing excess heat being at least partially stored within the reaction vessel and completely reacting the portion of organic sludge;
e) opening the reaction vessel to exhaust under depressurization of the reaction vessel the reacted components of the portion of the organic sludge and closing the reaction vessel after the reacted components are removed from the reaction vessel, thereby maintaining a temperature of at least 200°C in the reaction vessel; wherein the excess heat released by the oxidation reaction is stored at least partially intermittently in a solid shell around the reaction vessel and/or in the wall of the reaction vessel and/or in a solid body placed inside the reaction vessel; and
f) repeating the cycle of injecting another portion of the pourable pulp and the oxidant into the reaction vessel and relaunching the oxidation reaction in the reaction vessel without an external supply of heat.

The treatment of the organic sludge, such as fecal matter, which may have also an inorganic content is accomplished by thermal decomposition of the fecal matter and reaction with oxygen into carbon dioxide, water and its mineral compounds in the high pressure reaction vessel. This process is known as 'hydrothermal oxidation' (HTO). Above the critical temperature and pressure water forms a homogeneous mixture with gases such as O₂, N₂, CO₂. Reactions in this single-phase fluid mixture are not hindered by slow mass transfer from one phase to the other, as is the case of typical "wet oxidation" processes operated at subcritical conditions with air or pure oxygen. Further, once the oxidation is started with an initial amount of external heat, the process is self-sustaining because the temperature after the release of the reacted products is controlled by appropriate release of the reacted products and/or by an appropriate heat capacity of the reaction vessel and/or by an appropriate amount of the next portion of the organic sludge. Due to these adjustments, the temperature in the reaction vessel does not drop under 200°C and the next portion of organic sludge already "sees" a temperature of at least 200°C after being injected. Of course, the organic sludge can be macerated or diluted with water to the extent desired.

Reaction-wise, excellent conditions can be offered when the temperature and the pressure reached in the reaction vessel are greater than the critical temperature and the critical pressure of pure water, respectively. One of the advantages is that the heat needed to heat up the contents of the reactor is significantly less under supercritical conditions than it would be under atmospheric pressure (or in general at pressures below the critical pressure).

The supply of the oxidant that has to be provided has to be solved in a way that it is available even in under-developed areas. Therefore, the oxidant may be ambient air, pure oxygen, oxygen-enriched air, or other oxygen-containing gases, wherein for the latter the oxygen can be preferably derived from decomposed hydrogen peroxide or can be preferably obtained by ambient pressure or pressurized water electrolysis. In the latter case, the co-produced hydrogen could be used to improve the ignition of the mixture.

Further, a suitable supply of the oxidant can be achieved when the oxidant is pressurized to a value above 1000 hPa and below about 40 MPa before entering the reaction vessel. Preferably, the portion of organic sludge can be pushed by the compressed oxidant from the injection chamber into the reaction vessel, wherein the oxidant may be stored intermittently in a pressure vessel or gas bottle. The pressurized oxidant can therefore be the supplied together with the organic sludge being effectively the propellant charge for the portion of organic sludge.

In order to maintain the reaction temperature in the reaction vessel during exhausting and refilling at the desired level, the heat capacity of the reaction vessel is designed in a way that the excess heat released by the oxidation reaction is stored at least partially intermittently in a solid shell around the reaction vessel and/or in the wall of the reaction vessel and/or in a solid body placed inside the reaction vessel. Further, the solid body placed inside the reaction vessel may comprise a catalytic surface promoting the oxidation reaction.

Since the oxidation reaction is - once being started - maintained by the appropriate pressure and temperature level, only the initial heating up has to be provided externally. Suitably, the initial heating up of the reaction vessel can be carried out using electric energy, e.g. by resistive, inductive, or microwave heating, and/or using combustion flame and/or using a heat transfer gas, or a fluid or a solid and/or using direct solar irradiation. All electricity used in the process can be provided by a solar panel and/or a battery and/or a wind turbine or the like and can also be used for example for the compression of air.

In order to maintain the preferred reaction conditions in the reaction vessel, and/or to make the sludge more pourable, the organic sludge can be heated to a temperature below ca. 100°C before being injected into the reaction vessel. Preferably, the excess heat can be partially used to preheat the organic sludge and/or the oxidant and/or to evaporate and/or sterilize urine and/or to destroy pathogens, toxic chemicals, such as warfare agents, pharmaceutical wastes, biohazards before being released to the environment. Further, the heat of the exhausted reacted products can be used for this purpose, too.

In order to realize a simple controlling of the method, some of the pressurized oxidant can be used for pneumatic actuation of valves, i.e. inlet and outlet valves of the injection chamber and the reaction vessel, and/or drives and/or safety devices.

Suitably, the oxidant pressure can be generated by an electric compressor. Further, the heat of the reacted products when being exhausted can be used to generate electricity, in particular by a thermoelectric generator, and/or useful heat and/or the reacted products can undergo a treatment to reduce the carbon monoxide concentration, e.g. by bringing the reacted products in contact with an oxidation catalyst, e.g. manganese oxide, cobalt oxide, or platinum.

Furthermore, the depressurization of the reactor vessel during exhausting of the reacted products can be used to move another device and/or to create mechanical energy, e.g. for electric power generation.

Usually, under-developed areas suffer from clean water supply or from water in general. It is therefore advantageous when the water content in the reacted products can be at least partially recovered. The reacted aqueous product can be preferably treated by activated carbon, biological treatment, ion exchange or reverse osmosis to provide clean and/or sterile water and/or the mineral content in the reacted products can be at least partially recovered and preferably being used as fertilizer.

Preferred embodiments of the present invention are hereinafter explained in more detail with reference to the attached drawings which depicts in:
- Figure 1: schematically a system for the oxidation of an organic sludge;
- Figure 2: schematically the provision of the HTO process in cyclic batch operation; and
- Figure 3: proof-of-concept for the cyclic batch operation of a lab-scale prototype running on a model solution.

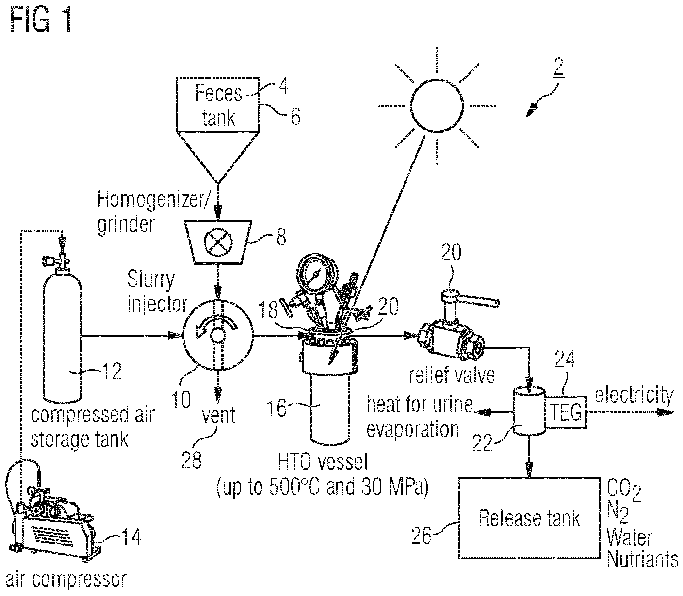

Figure 1 schematically depicts a system 2 for the oxidation of an organic sludge 4. The organic sludge which may also comprise inorganic components is stored in a feces tank 6. This feces tank 6 can for example be connected to the bowl of a toilet. The organic sludge 4 is ground/homogenized in a grinder/homogenizer unit 8 and then portion-wise conveyed by gravitation into a slurry injector 10. The slurry injector 10 is pressurized with compressed air stemming from a compressed air storage tank 12. The compressed air is provided by an air compressor 14 to the compressed air storage tank 12. Once the slurry injector 10 is filled with a portion of the organic slurry 4, the portion of the organic slurry is conveyed by means of the compressed air as propellant agent into a reaction vessel 16 having an inlet valve 18 and an outlet (or relief) valve 20. In one variant, the inlet valve 18 acts as an injector valve for the portion of the organic sludge 4 to be oxidized in the reaction vessel 16. In another variant, the injection valve and the injector volume can be two separate units. The portion of the organic sludge is filled into the slurry injector from the feces tank 6, typically by gravitational force. In the present example, the organic sludge is homogenized and/or ground to provide a pourable pulp before being filled into the slurry injector 10 in order to avoid blockages.

The portion of the organic sludge is then propelled into the depressurized but hot reaction vessel by a flow of the pressurized air coming from the compressed air storage tank 12. This tank 12 is periodically refilled from the air compressor 14. After the portion of the organic sludge has been injected into the reaction vessel, together with an appropriate amount of air, the inlet valve 18 is closed. The mixture of organic sludge and air remains for a certain time in the reaction vessel 16, where the organic matter is oxidized to mainly CO₂ and H₂O.

Then, the contents of the reaction vessel 16 are rapidly discharged by opening the relief (outlet) valve 20. The contents are typically collected in a release tank 26, preferably after being cooled in a cooling unit 22 to avoid steam escaping from the release tank 26. The release tank 26 is used to separate the condensed water from the gases (mainly CO₂, N₂, O₂). The minerals contained in the feed to the release tank 26 are also kept in the release tank 26, either dissolved in the water or as precipitated solids. The gases may then be released to the atmosphere or used elsewhere. The water and/or the minerals may be collected from the release tank 26 and used as fertilizer or for other purposes. The heat removed from the hot effluent during cooling may be stored and used for other services, e.g. for evaporating water from urine in a diversion toilet or for producing steam or hot water. Alternatively, a thermoelectric generator (TEG) 24 may be coupled to the cooling unit 22 to produce electricity.

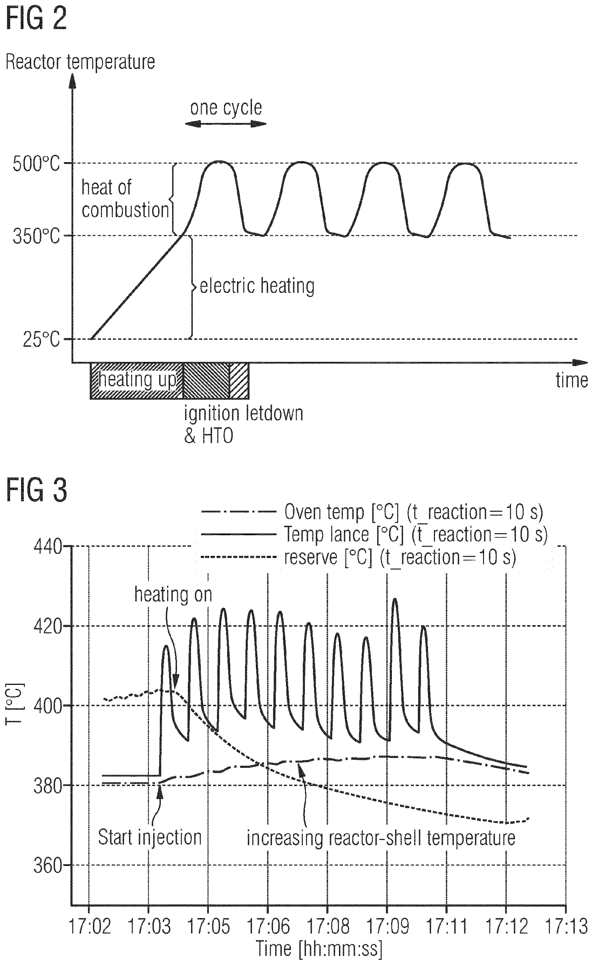

In the present invention, the HTO process is designed as a cyclic batch process which is depicted in Fig. 2. During the HTO reaction excess heat is produced that is used to sustain the necessary reaction temperature between ca. 300 and 500°C. Figure 2 schematically represents the temperature cycling during self-sustaining operation of the system 2.

The HTO process is initially started by externally heating the reaction vessel 16 to reaction temperature, for example by focalized sun irradiation. The reaction vessel 16 can be already filled for instance with a portion of the organic (fecal) sludge 4 and compressed air. Once the exothermic reaction has ignited, the reaction heat further increases the process temperature. A large portion of the reaction heat is transferred to and stored in the wall of the reaction vessel. To increase the storage capability, additional heat storage shells, e.g. made from brass, may be fixed around the reactor. Thus, no more external heating is necessary once the reaction has started. After the organic material is decomposed and no more heat is produced the reactor is emptied and re-filled with e.g. a new portion of organic fecal sludge 4 and compressed air. The reaction ignites automatically as the material enters the hot reaction vessel 16, and the next cycle starts.

Filling and emptying of the reaction vessel 16 is realized by using compressed air as carrier for the organic sludge and as oxidant. Other oxidants are also conceivable.

An important aspect is to avoid operating within the steam region of water (i.e. at p < pₛₐₜ for T < T_{c} and at p < p_{c} for T ≥ T_{c}; p_{c} and T_{c} being the critical pressure (22.1 MPa) and temperature (374°C) of pure water, respectively, and pₛₐₜ the saturation pressure of pure water). Within this region an increased formation of tars and coke was observed, which are undesired products.

One advantage of operating the process in the supercritical region is that the heat demand for heating the feed up to reaction temperature is less than if operated at the same temperature but within the steam region.

### Advantages of the process

- The process according to the present invention does not require the drying of organic sludge.
- Almost complete destruction of organic matter to CO₂ and H₂O. Organic N is mostly converted to NH₃. NOx are not formed.
- Complete inactivation of pathogens (worm eggs, viruses, bacteria, fungi, etc.) due to temperature level well above 200°C.
- Particularly suited to treating small volumes of organic sludges.
- Small footprint; no special requirements for operation.
- Low risk of plugging due to the absence of a mechanical pumping device.
- Can accommodate large variations in feed composition (dry matter content, inhomogeneous mixtures, inorganic matter).
- Provides a self-sustaining operation with respect to the thermal energy consumed for HTO.
- Intermittent operation possible due to fast start-up.
- Process does not require a skilled operator.

The operation principle of the method according to the present invention has been demonstrated in a lab-scale rig using the following sequence:
a) Preheating the empty and depressurized reaction vessel 16 to 380°C;
b) Filling the injection chamber 10 with 2 mL of organic model solution (here a solution containing ca. 22% glycerol, 11% ethanol and 67% water was used) with a syringe pump at ambient pressure; the syringe pump was used only for ease of operation and because a solids-free solution was used.
c) Pressurizing the injection chamber 10 with 184 bar of synthetic air from the compressed air storage tank 12;
d) Opening the inlet valve 18: the mixture of air and model solution is injected into the hot reaction vessel 16;
e) Closing the inlet valve 18. The temperature progression in the reaction vessel 16 is shown in Fig. 3. The mixture heats up quickly and ignites. It reaches peak temperatures between ca. 415°C and 425°C. The pressure reaches peak values of ca. 290-310 bar;
e) After a predetermined (desired) reaction time, in this scenario 10 s, opening the outlet valve 20: the reacted mixture is suddenly released into the release tank 26, here filled with cold water. The pressure in the reaction vessel 16 drops to almost ambient but the reaction vessel 16 remains hot (i.e. above 380°C); in this regard the design of the reaction vessel 16 and the amount of the organic sludge filled into the reaction vessel 16 need to be considered carefully in order to maintain the desired hot environment in the reaction vessel 16 when the next portion of the organic sludge is filled into the reaction vessel 16;
f) Closing the outlet valve 20;
g) Depressurizing the (empty) injection chamber 10 by opening a corresponding vent valve 28; and
h) Starting the next cycle by repeating the sequence from step b) on.

The measured temperature cycles of ten such sequences is shown in Figure 3. After the first sequence an external heater of the reaction vessel 16 was turned off to monitor the autothermal operation. The subsequent operational cycles were reproducible. The temperature of the brass shells around the reaction vessel 16 increases with each cycle, indicating that surplus heat is generated, which leads to autothermal operation.

## Claims

1. A method for an oxidation of an organic sludge (4), comprising the following steps:
a) collecting the organic sludge (4) and pretreating the organic sludge (4) to generate a pourable pulp;
b) conveying a portion of the pourable pulp (4) into an injection chamber (10), preferably by gravitation;
c) injecting the portion of the pourable pulp (4) and an oxidant into a reaction vessel (16);
d) initially pressurizing and heating-up the reaction vessel (16) in order to initiate an oxidation reaction in the reaction vessel (16); said oxidation reaction producing excess heat being at least partially stored within the reaction vessel (16) and completely reacting the portion of organic sludge (4);
e) opening the reaction vessel (16) to exhaust under depressurization of the reaction vessel (16) the reacted components of the portion of the organic sludge (4) and closing the reaction vessel (16) after the reacted components are removed from the reaction vessel (16), thereby maintaining a temperature of at least 200°C in the reaction vessel (16), wherein the excess heat released by the oxidation reaction is stored at least partially intermittently in a solid shell around the reaction vessel (16) and/or in the wall of the reaction vessel (16) and/or in a solid body placed inside the reaction vessel (16); and
f) repeating the cycle of injecting another portion of the pourable pulp (4) and the oxidant into the reaction vessel (16) and re-igniting the oxidation reaction in the reaction vessel (16) without an external supply of heat.

2. The method according to claim 1, wherein the temperature and the pressure reached in the reaction vessel (16) are greater than the critical temperature and the critical pressure of pure water, respectively.

3. The method according to claim 1 or 2, wherein the oxidant is air, pure oxygen, oxygen-enriched air, or other oxygen-containing gases, wherein for the latter the oxygen is preferably derived from decomposed hydrogen peroxide or is preferably obtained by ambient pressure or pressurized water electrolysis.

4. The method according to any of the preceding claims, wherein the oxidant is pressurized to a pressure above 1000 hPa and below about 40 MPa before entering the reaction vessel (16).

5. The method according to claim 4, wherein the portion of organic sludge (4) is pushed by the compressed oxidant from the injection chamber (10) into the reaction vessel (16), wherein the oxidant is stored intermittently in a pressure vessel (16) or gas bottle (12).

6. The method to claim 1, wherein the solid body placed inside the reaction vessel (16) comprises a catalytic surface promoting the oxidation reaction.

7. The method according to any of the preceding claims, wherein the initial heating up of the reaction vessel is carried out using electric energy, e.g. by resistive, inductive, or microwave heating, and/or using combustion flame and/or using a heat transfer gas, or a fluid or a solid and/or using direct solar irradiation.

8. The method according to any of the preceding claims, wherein the organic sludge (4) is heated to a temperature below ca. 100°C before being injected into the reaction vessel (16).

9. The method to any of the preceding claims, wherein the excess heat is partially used to preheat the organic sludge (4) and/or the oxidant and/or to evaporate and/or sterilize urine and/or to destroy pathogens, toxic chemicals, such as warfare agents, pharmaceutical wastes, biohazards before being released to the environment.

10. The method according to any of the preceding claims, wherein some of the pressurized oxidant is used for pneumatic actuation of valves and/or drives and/or safety devices.

11. The method according to any of the preceding claims, wherein the oxidant pressure is generated by an electric compressor.

12. The method according to any of the preceding claims, wherein the heat of the reacted products when being exhausted is used to generate electricity and/or useful heat and/or the reacted products undergo a treatment to reduce the carbon monoxide concentration, e.g. by bringing the reacted products in contact with an oxidation catalyst.

13. The method according to any of the preceding claims, wherein the depressurization of the reactor vessel (16) is used to move another device and/or to create mechanical energy.

14. The method according to any of the preceding claims, wherein the water content in the reacted products is at least partially recovered and is preferably treated by activated carbon, biological treatment, ion exchange or reverse osmosis to provide clean and/or sterile water and/or the mineral content in the reacted products is at least partially recovered and preferably used as fertilizer.

## Patentansprüche

1. Verfahren zur Oxidation eines organischen Schlamms (4), welches die folgenden Schritte umfasst:
a) Sammeln des organischen Schlamms (4) und Vorbehandeln des organischen Schlamms (4), um einen gießfähigen Brei zu erzeugen;
b) Fördern eines Teils des gießfähigen Breis (4) in eine Einspritzkammer (10), vorzugsweise durch Schwerkraft;
c) Einspritzen des Teils des gießfähigen Breis (4) und eines Oxidationsmittels in ein Reaktionsgefäß (16);
d) erstmaliges Druckbeaufschlagen und Erwärmen des Reaktionsgefäßes (16), um eine Oxidationsreaktion in dem Reaktionsgefäß (16) auszulösen; wobei diese Oxidationsreaktion überschüssige Wärme erzeugt, die wenigstens teilweise innerhalb des Reaktionsgefäßes (16) gespeichert wird und ein vollständiges Reagieren des Teils des organischen Schlamms (4) bewirkt;
e) Öffnen des Reaktionsgefäßes (16), um bei Druckentlastung des Reaktionsgefäßes (16) die umgesetzten Komponenten des Teils des organischen Schlamms (4) abzusaugen, und Schließen des Reaktionsgefäßes (16), nachdem die umgesetzten Komponenten aus dem Reaktionsgefäß (16) entfernt wurden, dabei Aufrechterhalten einer Temperatur von wenigstens 200 °C im Reaktionsgefäß (16), wobei die durch die Oxidationsreaktion freigesetzte überschüssige Wärme wenigstens teilweise in einem massiven Mantel um das Reaktionsgefäß (16) herum und/oder in der Wand des Reaktionsgefäßes (16) und/oder in einem massiven Körper, der im Inneren des Reaktionsgefäßes (16) angeordnet wird, zwischengespeichert wird; und
f) Wiederholen des Zyklus des Einspritzens eines weiteren Teils des gießfähigen Breis (4) und des Oxidationsmittels in das Reaktionsgefäß (16) und erneutes Auslösen der Oxidationsreaktion in dem Reaktionsgefäß (16) ohne eine äußere Zufuhr von Wärme.

2. Verfahren nach Anspruch 1, wobei die Temperatur und der Druck, die in dem Reaktionsgefäß (16) erreicht werden, größer als die kritische Temperatur bzw. der kritische Druck von reinem Wasser sind.

3. Verfahren nach Anspruch 1 oder 2, wobei das Oxidationsmittel aus Luft, reinem Sauerstoff, mit Sauerstoff angereicherter Luft oder anderen sauerstoffhaltigen Gasen besteht, wobei für die Letzteren der Sauerstoff vorzugsweise aus zersetztem Wasserstoffperoxid erhalten oder vorzugsweise durch Elektrolyse von Wasser bei Umgebungsdruck oder erhöhtem Druck gewonnen wird.

4. Verfahren nach einem der vorhergehenden Ansprüche, wobei das Oxidationsmittel bis zu einem Druck von über 1000 hPa und unter etwa 40 MPa mit Druck beaufschlagt wird, bevor es in das Reaktionsgefäß (16) eintritt.

5. Verfahren nach Anspruch 4, wobei der Teil des organischen Schlamms (4) durch das komprimierte Oxidationsmittel aus der Einspritzkammer (10) in das Reaktionsgefäß (16) gedrückt wird, wobei das Oxidationsmittel in einem Druckgefäß (16) oder einer Gasflasche (12) zwischengespeichert wird.

6. Verfahren nach Anspruch 1, wobei der massive Körper, der im Inneren des Reaktionsgefäßes (16) angeordnet wird, eine katalytische Oberfläche umfasst, welche die Oxidationsreaktion fördert.

7. Verfahren nach einem der vorhergehenden Ansprüche, wobei das erstmalige Erwärmen des Reaktionsgefäßes unter Verwendung von elektrischer Energie durchgeführt wird, z. B. durch Widerstandsheizung, induktive oder Mikrowellenerwärmung, und/oder unter Verwendung einer Verbrennungsflamme und/oder unter Verwendung eines Wärmeübertragungsgases oder eines Fluids oder eines Festkörpers und/oder unter Verwendung direkter Sonneneinstrahlung.

8. Verfahren nach einem der vorhergehenden Ansprüche, wobei der organische Schlamm (4) auf eine Temperatur unter ca. 100 °C erwärmt wird, bevor er in das Reaktionsgefäß (16) eingespritzt wird.

9. Verfahren nach einem der vorhergehenden Ansprüche, wobei die überschüssige Wärme teilweise verwendet wird, um den organischen Schlamm (4) und/oder das Oxidationsmittel vorzuwärmen und/oder um Urin zu verdampfen und/oder zu sterilisieren und/oder um Krankheitserreger, giftige Chemikalien wie etwa Kampfstoffe, pharmazeutische Abfälle, biologische Gefahrenstoffe zu zerstören, bevor sie in die Umwelt freigesetzt werden.

10. Verfahren nach einem der vorhergehenden Ansprüche, wobei ein Teil des druckbeaufschlagten Oxidationsmittels zur pneumatischen Betätigung von Ventilen und/oder Antrieben und/oder Sicherheitsvorrichtungen verwendet wird.

11. Verfahren nach einem der vorhergehenden Ansprüche, wobei der Druck des Oxidationsmittels von einem elektrischen Kompressor erzeugt wird.

12. Verfahren nach einem der vorhergehenden Ansprüche, wobei die Wärme der umgesetzten Produkte, wenn sie abgesaugt werden, verwendet wird, um Elektrizität und/oder Nutzwärme zu erzeugen, und/oder die umgesetzten Produkte einer Behandlung unterzogen-werden, um die fi zu verringern, z. B. indem die umgesetzten Produkte mit einem Oxidationskatalysator in Kontakt gebracht werden.

13. Verfahren nach einem der vorhergehenden Ansprüche, wobei die Druckentlastung des Reaktionsgefäßes (16) verwendet wird, um eine andere Vorrichtung zu bewegen und/oder um mechanische Energie zu erzeugen.

14. Verfahren nach einem der vorhergehenden Ansprüche, wobei der Wassergehalt in den umgesetzten Produkten wenigstens teilweise zurückgewonnen wird und vorzugsweise durch Aktivkohle, biologische Behandlung, Ionenaustausch oder Umkehrosmose behandelt wird, um sauberes und/oder steriles Wasser bereitzustellen, und/oder wobei der Mineralgehalt in den umgesetzten Produkten wenigstens teilweise zurückgewonnen wird und vorzugsweise als Dünger verwendet wird.

## Revendications

1. Procédé d'oxydation d'une boue (4) organique, comprenant les stades suivants :
a) on collecte la boue (4) organique et on prétraite la boue (4) organique pour produire une pulpe versable ;
b) on transporte une partie de la pulpe (4) versable dans une chambre (10) d'injection, de préférence par gravitation ;
c) on injecte la partie de la pulpe (4) versable et un oxydant dans un récipient (16) de réaction ;
d) on met sous pression et on chauffe initialement le récipient (16) de réaction, afin d'amorcer une réaction d'oxydation dans le récipient (16) de réaction, la réaction d'oxydation produisant de la chaleur en excès, qui est emmagasinée, au moins en partie, dans le récipient (16) de réaction et faisant réagir complètement la partie de la boue (4) organique ;
e) on ouvre le récipient (16) de réaction pour faire s'échapper, avec dépressurisation du récipient (16) de réaction, les constituants ayant réagi de la partie de la boue (4) organique et on ferme le récipient (16) de réaction après que les constituants ayant réagi ont été retirés du récipient (16) de réaction, en maintenant ainsi une température d'au moins 200°C dans le récipient (16) de réaction, la chaleur en excès, libérée par la réaction d'oxydation, étant emmagasinée, au moins en partie par intermittence, dans une coquille massive autour du récipient (16) de réaction et/ou dans la paroi du récipient (16) de réaction et/ou dans un corps massif placé à l'intérieur du récipient (16) de réaction ; et
f) on répète le cycle d'injection d'une autre partie de la pulpe (4) versable et de l'oxydant dans le récipient (16) de réaction et on réamorce la réaction d'oxydation dans le récipient (16) de réaction, sans fourniture extérieure de chaleur.

2. Procédé suivant la revendication 1, dans lequel la température et la pression atteintes dans le récipient (16) de réaction sont plus hautes que la température critique et la pression critique de l'eau pure, respectivement.

3. Procédé suivant la revendication 1 ou 2, dans lequel l'oxydant est de l'air, de l'oxygène pur, de l'air enrichi en oxygène, ou d'autres gaz contenant de l'oxygène, dans lequel, pour le dernier cas, l'oxygène dérive de préférence de peroxyde d'hydrogène décomposé ou est obtenu de préférence par électrolyse de l'eau sous pression ou à la pression ambiante.

4. Procédé suivant l'une quelconque des revendications précédentes, dans lequel on met l'oxydant sous une pression au dessus d'environ 1000 hPa et en dessous d'environ 40 MPa avant l'entrée dans le récipient (16) de réaction.

5. Procédé suivant la revendication 4, dans lequel on pousse la partie de boue (4) organique par l'oxydant comprimé de la chambre (10) d'injection dans le récipient (16) de réaction, l'oxydant étant emmagasiné par intermittence dans un récipient (16) sous pression ou dans une bouteille (12) de gaz.

6. Procédé suivant la revendication 1, dans lequel le corps massif, placé à l'intérieur du récipient (16) de réaction, comprend une surface catalytique favorisant la réaction d'oxydation.

7. Procédé suivant l'une quelconque des revendications précédentes, dans lequel on effectue le stade initial de chauffage du récipient de réaction en utilisant de l'énergie électrique, par exemple par chauffage résistif, inductif ou par micro-onde, et/ou en utilisant une flamme de combustion et/ou en utilisant un gaz de transfert de chaleur, ou un fluide ou un solide et/ou en utilisant directement le rayonnement solaire.

8. Procédé suivant l'une quelconque des revendications précédentes, dans lequel on chauffe la boue (4) organique à une température en dessous d'environ 100°C avant de l'injecter dans le récipient (16) de réaction.

9. Procédé suivant l'une quelconque des revendications précédentes, dans lequel on utilise en partie la chaleur en excès pour préchauffer la boue (4) organique et/ou l'oxydant et/ou pour évaporer et/ou stériliser de l'urine et/ou pour détruire des agents pathogènes, des produits chimiques toxiques, tels que des agents chimiques de combat, des déchets pharmaceutiques, des produits dangereux biologiquement avant de les relâcher à l'atmosphère.

10. Procédé suivant l'une quelconque des revendications précédentes, dans lequel on utilise une partie de l'oxydant sous pression pour l'actionnement pneumatique de soupapes et/ou d'entraînements et/ou de dispositifs de sécurité.

11. Procédé suivant l'une quelconque des revendications précédentes, dans lequel on produit la pression de l'oxydant par un compresseur électrique.

12. Procédé suivant l'une quelconque des revendications précédente, dans lequel on utilise la chaleur des produits ayant réagi lorsqu'ils s'échappent pour produire de l'électricité et/ou de la chaleur utile et/ou les produits ayant réagi subissent un traitement pour réduire la concentration en monoxyde de carbone, en mettant par exemple les produits ayant réagi en contact avec un catalyseur d'oxydation.

13. Procédé suivant l'une quelconque des revendications précédentes, dans lequel on utilise la dépressurisation du récipient (16) de réaction pour mettre en mouvement un autre dispositif et/ou pour créer de l'énergie mécanique.

14. Procédé suivant l'une quelconque des revendications précédentes, dans lequel la teneur en eau des produits ayant réagi est récupérée, au moins en partie, et est de préférence traitée par du charbon actif, par un traitement biologique, par un échange d'ions ou par osmose inverse, pour obtenir de l'eau propre et/ou stérile et/ou la teneur en produits minéraux des produits ayant réagi est récupérée, au moins en partie, et utilisée, de préférence, comme engrais.
